# EUROPÄISCHE PATENTSCHRIFT

(11) **EP 0 484 315 B1**
(45) Veröffentlichungstag und Bekanntmachung des Hinweises auf die Patenterteilung: **27.12.1995**
(21) Anmeldenummer: 91890259.4
(22) Anmeldetag: 30.10.1991
(51) Int. Cl.: B29C 45/44

(54) **Spritzwerkzeug**
Injection mould
Moule d'injection

(30) Priorität: 30.10.1990 AT 2192/90
(43) Veröffentlichungstag der Anmeldung: 06.05.1992
(73) Patentinhaber: Zahradnik, Rudolf, A-2130 Mistelbach (AT)
(72) Erfinder: Fallent, Gerhard, A-4461 Laussa 182 (AT)
(74) Vertreter: Müllner, Erwin, Dr.

(56) Entgegenhaltungen:
- DE-A- 3 444 879
- DE-B- 1 255 293
- FR-A- 1 344 185
- NL-A- 7 809 421
- US-A- 4 456 214

## Beschreibung

Die Erfindung betrifft eine Vorrichtung zur Herstellung von Rohrfittings mit einer inneren Ringnut, welche Vorrichtung im Inneren einen Formkern mit einem Ringwulst zur Ausformung der Ringnut aufweist; wobei der Ringwulst in Segmente unterteilt ist, die über die Zylinderfläche des Formkerns hinaus ausschiebbar und in das Innere des Formkernes einziehbar sind und von denen eine erste Segmentgruppe nach außen konvergierende Flanken aufweist und an den stirnseitigen Enden von etwa axial ausgerichteten Hebelsarmen von Winkelhebeln angeordnet sind, deren Drehachsen auf einem axial in einer Kernhülse beweglichen Ring angeordnet sind; wobei weiters die Segmente der zweiten Segmentgruppe zwischen den Segmenten der ersten Segmentgruppe liegen und an den Enden von etwa axial ausgerichteten Hebelsarmen von Hebeln angeordnet sind, deren Drehachsen unverschiebbar festliegen; wobei eine Ringmuffe im Inneren der Kernhülse auf einem zylindrischen Schaft als Kernträger über einem Druckluft- oder Hydraulikzylinder axial verschiebbar gelagert ist und in ihrer äußeren Mantelfläche am Umfang axial laufende Nuten oder Schlitze aufweist, in welche die etwa radial gerichteten Hebelsarme der Winkelhebel der ersten Segmentgruppe eingreifen.

Rohrfittings werden aus thermoplastischem Kunststoff im spritzgußverfahren hergestellt. An mindestens einem Rohrende ist bei diesen Rohrfittings eine Sicke zum Einlegen oder Einbringen einer Dichtung zum Zwecke der gegenseitigen Verbindung im Rahmen einer Rohrleitung vorgesehen. Diese Sicke stellt eine zum Rohrinneren offene Ringnut dar. Diese Ausbildung erfordert einen Formkern mit einem Ringwulst, der zum Entformen - also zum Herausziehen des Formkernes aus dem Fertigprodukt - in Segmente geteilt ist und in das Innere des Formkernes zurückgezogen werden kann.

Eine Konstruktion der eingangs genannten Art ist aus DE-B-1 255 293 bekannt. Nachteilig dabei ist, daß die Segmente der zweiten Segmentgruppe nicht aktiv eingeschwenkt werden können; sie werden vielmehr beim Abziehen des Rohres von diesem nach innen gedrückt, was - wenn das Rohr noch warm ist - dessen Maßhaltigkeit negativ beeinflussen kann. Außerdem benötigt die bekannte Konstruktion drei Hydraulikzylinder: einen zum Verschieben des Rohres, einen zum Verschieben der Kernhülse und einen zum Verschieben der beweglichen Ringmuffe. Sie ist daher sehr aufwendig.

Es ist Aufgabe der vorliegenden Erfindung, diese Nachteile zu beseitigen, insbesondere sollen auch die Segmente der zweiten Segmentgruppe ohne zusätzlichen Antrieb (ohne zusätzlichen Hydraulikzylinder) aktiv einschwenkbar sein.

Diese Aufgabe wird bei einer Vorrichtung der eingangs genannten Art erfindungsgemäß dadurch gelöst, daß auch die Hebel der zweiten Segmentgruppe als Winkelhebel ausgebildet sind, an deren stirnseitigen Enden die zugehörigen Segmente angeordnet sind und deren Drehachsen auf der Kernhülse festliegen, daß die Ringmuffe auch für die zweite Segmentgruppe in ihrer äußeren Mantelfläche am Umfang axial laufende Nuten oder Schlitze aufweist, in welche die etwa radial gerichteten Hebelsarme der Winkelhebel der zweiten Segmentgruppe eingreifen, und daß steuernde Endflächen der der ersten Segmentgruppe zugeordneten Nuten bei Verschiebung der Ringmuffe zum radialen und sodann axialen Zurückziehen der ersten Segmentgruppe und zur axialen Verschiebung des beweglichen Ringes Zusammen mit den Winkelhebeln der ersten Segmentgruppe und der ersten Segmentgruppe selbst zunächst mit den radialen Hebelsarmen der Winkelhebel dieser Segmentgruppe zur Anlage kommen und daß die der zweiten Segmentgruppe Zugeordneten Nuten steuernde Endflächen aufweisen, die im axialen Abstand zu den vorgenannten Endflächen liegen und die Winkelhebel der zweiten Segmentgruppe und damit die zweite Segmentgruppe Zurückziehen. Die gesamte Steuerung der zwei Segmentgruppen, nämlich das radialen Einziehen und sodann aixiale Zurückziehen der ersten Segmentgruppe und das anschließende Einziehen der zweiten Segmentgruppe wird ausschließlich und allein durch eine einzige Ringmuffe erreicht, in deren axiale, am Umfang versetzte Längsnuten die radialen Hebelsarme der Winkelhebel der ersten und der zweiten Segmentgruppe eingreifen Es sind keinerlei zusätzliche bewegliche Steuerelemente, wie Einlegestifte, Gleithülsen auf der Ringmuffe od.dgl. erforderlich. Daraus folgt die bei der Erfindung geringere Anzahl der beweglichen Teile im Inneren des Kernes mit den Vorteilen der höheren Betriebssicherheit, geringeren Kernabmessungen und exakteren Positionierung der den Ringwulst aufbauenden Segmente. Es ist zweckmäßig, wenn die Ringmuffe einen stirnseitigen Kreisringbereich aufweist, der bei ausgeschobenen Segmenten den Schwenkraum der Segmente ausfüllt, wobei der Kreisringbereich sowohl am Rücken der Segmente als auch an der Mantelfläche des zylindrischen Schaftes dicht anliegt. Das Untergreifen der Segmente durch die Ringmuffe führt zur Verriegelung in der Arbeitsstellung und zur Übernahme und Weiterleitung des Arbeitsdruckes bei der Ringnutherstellung sowie zur Wärmeleitung. Besonders vorteilhaft ist es, wenn im Bereich der Segmente an den Hebelsarmen Anlageflächen zur Lagebstimmung des Segmentes in radialer Richtung und Stirnflächen bzw. Keilflächen zur Lagebestimmung in axialer Richtung vorgesehen sind, die an Gegenflächen der Kernhülse oder eines einstellbaren Paßringes im Inneren der Kernhülse in der Arbeitsstellung der Vorrichtung anliegen. Eine Ausführungsform steht vor, daß an den Winkelhebein, der Kernhülse zugewandt, Schrägflächen bzw. Auflaufflächen gegenüber schrägen Innenflächen der Kernhülse oder eines mit dieser verbundenen Bauteiles vorgesehen sind. Schließlich ist es vorteilhaft, wenn die Winkelhebel der ersten Segmente eine der Kernhülse zugewendete Gleitfläche aufweisen, die bei axialer Verschiebung der aus der Arbeitsstellung zurückgezogenen Segmente an einer inneren Steuerfläche der Kernhülse oder eines Einsatzkörpers derselben gleitend anliegen. Nach dem Einziehen der ersten Segmentgruppe wird diese axial zurückgezogen, wobei die Winkelhebel durch die Gleitfläche in der eingezogenen Stellung festgehalten werden. Zum Ausfahren des Ringwulstes bzw. der ersten und zweiten Segmentgruppe sieht die Erfindung vor, daß an den axialen Hebelsarmen der Winkelhebel der ersten Segmentgruppe an der der Kernhülse abgewandten Seite jeweils eine Anlagefläche als Mitnehmer für die Stirnfläche der Ringmuffe bei deren Verschiebung in die Arbeitsstellung der Vorrichtung vorgesehen ist. Die Ringmuffe schiebt also unmittelbar mit ihrer Stirnseite die im Eingriff mit einer hakenförmigen Abstufung der Winkelhebel der ersten Segmentgruppe steht, diese erste Segmentgruppe in die Radialebene des Ringwulstes, um sodann auch das Ausschwenken der ersten Segmentgruppe zu bewirken. Für den gesamten Funktionsablauf ist es wesentlich, daß die Ringmuffe innerhalb einer Ausnehmung der Kernhülse relativ zu dieser durch einen Druckluft- oder Hydraulikzylinder axial verschiebbar ist, daß die Ringmuffe an dem dem Zylinder zugewandten Ende eine Mitnehmerfläche aufweist, welche an eine innere Ringfläche der Kernhülse anlegbar ist und daß die Kernhülse nach Öffnen der teilbaren Außenform und Ausrasten eines in die Teilungsebene zwischen Außenform und Kernhülse einlegbaren Paßringes zum Entformen des Spritzgußstückes von diesem abziehbar ist.

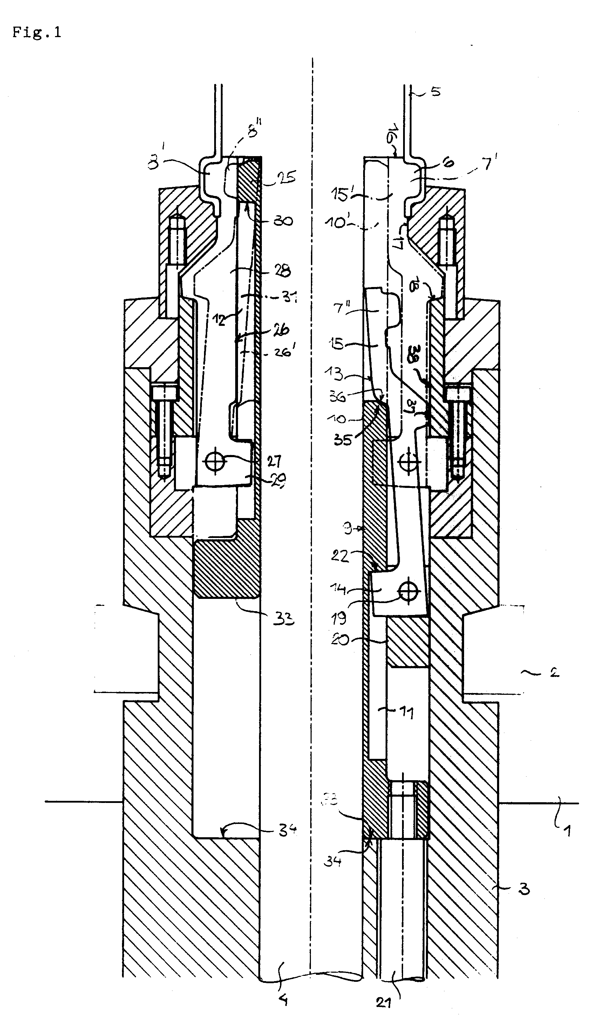

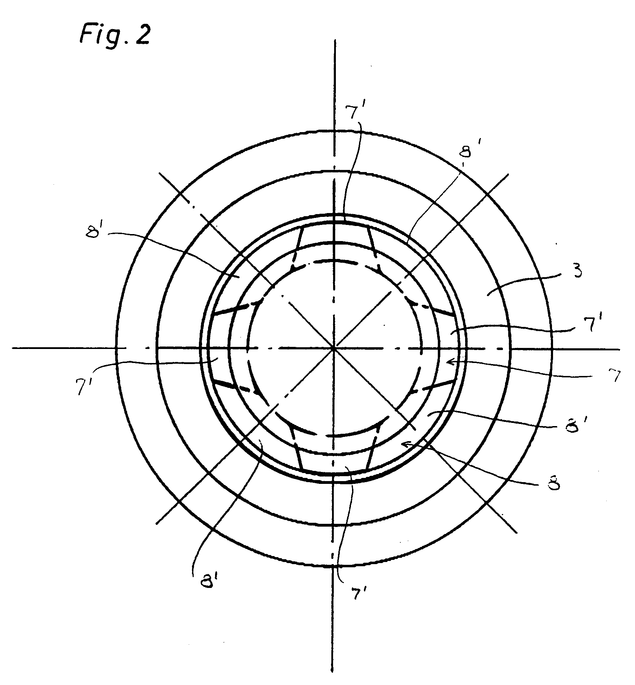

Ein Ausführungsbeispiel des Erfindungsgegenstandes ist in den Zeichnungen dargestellt. Fig. 1 zeigt einen Schnitt durch einen Teil einer erfindungsgemäßen Vorrichtung und Fig. 2 eine Frontansicht des Formkernes mit zwei Segmentgruppen die einen Ringwulst als Teil des Kernes aufbauen.

Innerhalb einer geteilten Außenform 1 liegt, mit einem Paßring 2 gesichert, ein Formkern, der eine Kernhülse 3 konzentrisch zu einem als zylindrischen Schaft ausgebildeten Kernträger 4 umfaßt. Ein Rohrfitting 5 trägt eine Ringnut 6, zu deren Ausformung der Formkern einen Ringwulst aufweist, der aus zwei Segmentgruppen 7,8 besteht, die radial in das Innere der Kernmantelfläche zurückziehbar sind. Die rechte Hälfte der Fig. 1 zeigt ein Segment 7' der ersten Segmentgruppe 7 in strichpunktierter Lage in der Arbeitsstellung und mit vollen Linien dieses Segment 7'' in der eingezogenen und zurückgeschobenen Lage. Die linke Hälfte der Fig. 1 zeigt ein Segment 8' der zweiten Segmentgruppe 8 in der Arbeitslage mit vollen Linien und dieses Segment 8'' in der eingezogenen Lage mit strichpunktierten Linien.

Das radiale Einziehen der Segmente der ersten Segmentgruppe 7 und das anschließend axiale Zurückziehen sowie das daran anschließende Einziehen der Segmente der zweiten Segmentgruppe 8 in das Innere des Kernes erfolgt mit Hilfe einer Ringmuffe 9. Diese umfaßt einen stirnseitigen Kreisringbereich 10 sowie in den radialen Ebenen der Segmente der Segmentgruppe 7 und 8 jeweils Nuten 11 und 12. Nuten der Type 11 und 12 wechseln einander am Umfang der Ringmuffe 9 ab - ebenso wie die in den Radialebenen der Nuten 11 und 12 liegenden Segmente der Segmentgruppe 7 und 8, wobei die Nuttype 11 zur ersten Segmentgruppe (rechte Hälfte der Fig. 1) und die Nut 12 zur zweiten Segmentgruppe zählt. In die Nut 11 (bzw. die identen Nuten der ersten Segmentgruppe) greift jeweils ein Winkelhebel 13 mit seinem radialen Hebelsarm 14 ein, während sein axialer Hebelsarm 15 ein erstes Segment 7' (bzw. 7'') trägt. In der Arbeitslage bei ausgefahrenem Ringwulst, der sich aus Stücken von abwechselnd aneinandergereihten ersten und zweiten Segmenten 7 und 8 zusammensetzt, die rechts in Fig.1 strichpunktiert dargestellt sind, liegt der ebenfalls strichliert dargestellte Kreisringbereich 10' der Ringmuffe 9 unterhalb des Segmentes 7' und stützt den axialen Hebelsarm 15' nach unten ab, sodaß er infolge der Anlageflächen 16, 17, 18 starr festgehalten und verriegelt ist.

Der Drehpunkt 19 des Winkelhebels 13 und seine im Winkel versetzten Äquivalente liegen auf einem axial im Inneren der Kernhülse 3 verschiebbaren Ring 20. Die Länge der Nut 11 ist so gewählt, daß beim Zurückziehen der Ringmuffe 9 über Zugstangen 21 mittels eines Hydraulikzylinders zuerst der Kreisringbereich 10' unter dem axialen Hebelsarm 15' weggezogen und dieser entriegelt wird und erst dann die Endfläche 22 der Nut 11 mit dem radialen Hebelsarm 14 in Eingriff kommt, wobei der Winkelhebel 13 um die Achse 19 gekippt und das Segment 7' eingezogen wird. Bei weiterem Zurückziehen der Ringmuffe 9 wandert der Winkelhebel 13 zusammen mit seiner Lagerung 19 und dem Ring 20 zurück in die in Fig. 1 rechts mit vollen Linien dargestellte Endposition. Dieses radiale Einziehen und sodann axiale Zurückziehen der Segmente 7' der ersten Segmentgruppe 7 ermöglicht es erst den Segmenten 8' der zweiten Segmentgruppe 8, ebenfalls nach innen eingezogen zu werden. Dieser Vorgang sei anhand der linken Hälfte der Fig. 1 erläutert. Die Nut 12 in der Ringmuffe 9 hat eine größere Länge als die Nut 11. Es verbleibt daher stirnseitig ein etwas kleinerer Kreisringbereich 25 zur Unterstützung und Verriegelung eines Winkelhebels 26, dessen Drehachse 27 gegenüber der Kernhülse 3 ortsfest ist. Auch der Winkelhebel 26 umfaßt einen axialen Hebelsarm 28 und einen radialen Hebelsarm 29, wobei ersterer ein Segment 8' der zweiten Segmentgruppe 8 trägt. Der Winkelhebel 26 ist in Fig. 1 in der Arbeitsstellung mit vollen Linien gezeichnet, bei der der aus den Segmenten bestehende Ringwulst ausgefahren ist. Der Winkelhebel 26 verfügt über Anschlagflächen,wie sie beim Winkelhebel 13 beschrieben sind. Beim Zurückziehen der Ringmuffe 9 wird vorerst der Winkelhebel 26 entriegelt und nach Durchlaufen der Nut 12, in die der radiale Hebelsarm 29 eintaucht, schlägt die Nutendfläche 30 kurz vor Erreichen der Endstellung an den radialen Hebelsarm 29 an und bewirkt ein Kippen des Winkelhebels 26 in die strichpunktiert eingezeichnete Stellung 31. In dieser Phase liegt eine Mitnehmerfläche 33 der Ringmuffe 9 an einer inneren Ringfläche 34 der Kernhülse 3 an und nimmt diese bei weiterer Zugkraft durch den Hydraulikzylinder über das Gestänge 21 mit, sofern die Außenform 1 geöffnet und der Paßring 2 entfernt wurde.

Beim Vorschieben der Ringmuffe 9 über die Hydraulik legt sich die Stirnfläche 35 der Ringmuffe 9 an eine hakenförmig abgewinkelte Anlagefläche 36 des Winkelhebels 13 an. Letzterer kann nicht nach außen ausweichen, weil sein Rücken 37 an einer Steuerfläche 38 anliegt und wird daher in Richtung auf die Arbeitsstellung der ersten Segmentgruppe mitgenommen. Während dieser Vorwärtsbewegung der Ringmuffe 9 drückt der Kreisringbereich 25 der Ringmuffe 9, längs des strichpunktiert dargestellten Winkelhebels 26' gleitend, diesen allmählich in die mit vollen Linien gezeichnete Position 26. Es folgt der Winkelhebel 13, sobald der gleitende Ring 20 das Ende seiner Gleitbahn erreicht hat und auch die Gleitfläche 38 endet und in die Anlagefläche 18 zurückspringt. Es führt dann das Verschieben der Ringmuffe 9 auch beim Winkelhebel 13 zu einer Kippbewegung, wobei der Kreisringbereich 10 sowie beim Winkelhebel 26 der Kreisringbereich 25 die Segmente 7' bzw. 8' in die Arbeitsstellung drücken und diese dort gegen ein Rückdrehen bei Krafteinwirkung verriegeln.

Fig. 2 zeigt eine Frontansicht des Formkernes nach Fig. 1. Innerhalb der Kernhülse 3 sind die Segmente 7' der ersten Segmentgruppe 7 und die Segmente 8' der zweiten Segmentgruppe 8 strichliert dargestellt. Man erkennt die Keilform der Segmente 7' und 8', die es ermöglicht, daß die Segmente 7' der ersten Segmentgruppe zuerst radial nach innen gezogen und dann axial verschoben werden, worauf dann die Segmente 8' der zweiten Segmentgruppe 8 freigestellt sind und ebenfalls radial nach innen eingezogen werden können. Im Ausführungsbeispiel umfassen die beiden Segmentgruppen 7 und 8 jeweils vier Segmente 7' und vier Segmente 8'.

## Patentansprüche

1. Vorrichtung zur Herstellung von Rohrfittings mit einer inneren Ringnut, welche Vorrichtung im Inneren einen Formkern mit einem Ringwulst zur Ausformung der Ringnut aufweist; wobei der Ringwulst in Segmente (7', 8'; 7'', 8'') unterteilt ist, die über die Zylinderfläche des Formkerns hinaus ausschiebbar und in das Innere des Formkerns einziehbar sind und von denen eine erste Segmentgruppe (7) nach außen konvergierende Flanken aufweist und an den stirnseitigen Enden von etwa axial ausgerichteten Hebelsarmen (15) von Winkelhebeln (13) angeordnet sind, deren Drehachsen(19) auf einem axial in einer Kernhülse beweglichen Ring (20) angeordnet sind; wobei weiters die Segmente (8', 8'') der zweiten Segmentgruppe (8) zwischen den Segmenten (7', 7'') der ersten Segmentgruppe (7) liegen und an den Enden von etwa axial ausgerichteten Hebelsarmen (28) von Hebeln (26) angeordnet sind, deren Drehachsen (27) unverschiebbar festliegen; wobei eine Ringmuffe (9) im Inneren der Kernhülse (3) auf einem zylindrischen Schaft als Kernträger (4) über einem Druckluft- oder Hydraulikzylinder axial verschiebbar gelagert ist und in ihrer äußeren Mantelfläche am Umfang axial laufende Nuten (11) oder Schlitze aufweist, in welche die etwa radial gerichteten Hebelsarme (14) der Winkelhebel (13) der ersten Segmentgruppe (7) eingreifen, dadurch gekennzeichnet, daß auch die Hebel (26) der zweiten Segmentgruppe (8) als Winkelhebel (26) ausgebildet sind, an deren stirnseitigen Enden die zugehörigen Segmente (8', 8'') angeordnet sind und deren Drehachsen (27) auf der Kernhülse (3) festliegen, daß die Ringmuffe (9) auch für die zweite Segmentgruppe (8) in ihrer äußeren Mantelfläche am Umfang axial laufende Nuten (12) oder Schlitze aufweist, in welche die etwa radial gerichteten Hebelsarme (29) der Winkelhebel (26) der zweiten Segmentgruppe (8) eingreifen, und daß steuernde Enflächen (22, 30) der der ersten Segmentgruppe (7) zugeordneten Nuten (11) bei Verschiebung der Ringmuffe (9) zum radialen und sodann axialen Zurückziehen der ersten Segmentgruppe (7) und zur axialen Verschiebung des beweglichen Ringes (20) zusammen mit den Winkelhebeln (13) der ersten Segmentgruppe (7) und der ersten Segmentgruppe (7) selbst zunächst mit den radialen Hebelsarmen (14) der Winkelhebel (13) dieser Segmentgruppe (7) zur Anlage kommen und daß die der zweiten Segmentgruppe (8) zugeordneten Nuten (12) steuernde Endflächen (30) aufweisen, die im axialen Abstand zu den vorgenannten Endflächen (22) liegen und die Winkelhebel (12) der zweiten Segmentgruppe (8) und damit die zweite Segmentgruppe (8) zurückziehen.

2. Vorrichtung nach Anspruch 1, dadurch gekennzeichnet, daß die Ringmuffe (9) einen stirnseitigen Kreisringbereich (10, 25) aufweist, der bei ausgeschobenen Segmenten (7', 8') den Schwenkraum der Segmente (7', 8') ausfüllt, wobei der Kreisringbereich (10, 25) sowohl am Rücken der Segmente (7', 8') als auch an der Mantelfläche des zylindrischen Schaftes (4) dicht anliegt.

3. Vorrichtung nach Anspruch 2, dadurch gekennzeichnet, daß im Bereich der Segmente (7', 8') an den Hebelsarmen (15, 28) Anlageflächen (17) zur Lagebestimmung des Segmentes (7', 8') in radialer Richtung und Stirnflächen (16) bzw. Keilflächen (18) zur Lagebestimmung in axialer Richtung vorgesehen sind, die an Gegenflächen der Kernhülse (3) oder eines einstellbaren Paßringes im Inneren der Kernhülse (3) in der Arbeitsstellung der Vorrichtung anliegen.

4. Vorrichtung nach den Ansprüchen 1 bis 3, dadurch gekennzeichnet, daß an den Winkelhebeln (13, 26), der Kernhülse (3) zugewandt, Schrägflächen (18) bzw. Auflaufflächen gegenüber schrägen Innenflächen der Kernhülse (3) oder eines mit dieser verbundenen Bauteiles vorgesehen sind.

5. Vorrichtung nach einem der Ansprüche 1 bis 4, dadurch gekennzeichnet, daß die Winkelhebel (13) der ersten Segmente (7') eine der Kernhülse (3) zugewandte Gleitfläche (37) aufweisen, die bei axialer Verschiebung der aus der Arbeitsstellung zurückgezogenen Segmente (7') an einer inneren Steuerfläche (38) der Kernhülse (3) oder eines Einsatzkörpers derselben gleitend anliegen.

6. Vorrichtung nach einem der Ansprüche 1 bis 5, dadurch gekennzeichnet, daß an den axialen Hebelsarmen (15) der Winkelhebel der ersten Segmentgruppe (7') an der der Kernhülse (3) abgewandten Seite jeweils eine Anlagefläche (36) als Mitnehmer für die Stirnfläche (35) der Ringmuffe (9) bei deren Verschiebung in die Arbeitsstellung der Vorrichtung vorgesehen ist.

7. Vorrichtung nach einem der Ansprüche 1 bis 6, dadurch gekennzeichnet, daß die Ringmuffe (9) innerhalb einer Ausnehmung der Kernhülse (3) relativ zu dieser durch einen Druckluft- oder Hydraulikzylinder axial verschiebbar ist, daß die Ringmuffe (9) an dem dem Zylinder zugewandten Ende eine Mitnehmerfläche (33) aufweist, welche an eine innere Ringfläche (34) der Kernhülse (3) anlegbar ist und daß die Kernhülse (3) nach Öffnen der teilbaren Außenform (1) und Ausrasten eines in die Teilungsebene zwischen Außenform (1) und Kernhülse (3) einlegbaren Paßringes (2) zum Entformen des Spritzgußstückes (5) von diesem abziehbar ist.

## Claims

1. A device for the production of pipe fittings with an inner annular groove, which device has in the interior a forming core with an annular bead for the forming of the annular groove; wherein the annular bead is divided into segments (7',8'; 7'', 8''), which are able to be pushed out beyond the cylinder surface of the forming core and are able to be drawn into the interior of the forming core and of which a first segment group (7) has outwardly converging flanks and are arranged on the ends, on the end face, of approximately axially aligned lever arms (15) of angle levers (13), the rotation axes (19) of which are arranged on a ring (20) which is axially movable in a core socket; wherein in addition the segments (8', 8'') of the second segment group (8) lie between the segments (7', 7'') of the first segment group (7) and are arranged on the ends of approximately axially aligned lever arms (28) of levers (26), the rotation axes (27) of which lie securely in a non-displaceable manner; wherein an annular sleeve (9) is mounted in the interior of the core socket (3) on a cylindrical shaft as core carrier (4) so as to be axially displaceable via a pressed air-or hydraulic cylinder and has in its outer surface grooves (11) or slits running axially on the periphery, into which grooves (11) or slits the approximately radially aligned lever arms (14) of the angle levers (13) of the first segment group (7) engage, characterised in that also the levers (26) of the second segment group (8) are constructed as angle levers (26), on the ends of which on the end side the associated segments (8', 8'') are arranged and the rotation axes (27) of which lie securely on the core socket (3), that the annular sleeve (9) also has grooves (12) or slits running axially on the periphery in its outer surface for the second segment group (8), into which grooves (12) or slits the approximately radially directed lever arms (29) of the angle levers (26) of the second segment group (8) engage, and that controlling end faces (22,30) of the grooves (11) associated with the first segment group (7) on displacement of the annular sleeve (9) for the radial and then axial withdrawal of the first segment group (7) and for the axial displacement of the movable ring (20) together with the angle levers (13) of the first segment group (7) and the first segment group (7) itself firstly come to abutment with the radial lever arms (14) of the angle levers (13) of this segment group (7), and that the grooves (12) associated with the second segment group (8) have controlling end faces (30) which lie at axial distance from the above-mentioned end faces (22) and withdraw the angle levers (12) of the second segment group (8) and hence the second segment group (8).

2. A device according to Claim 1, characterised in that the annular sleeve (9) has a circular ring region (10, 25) on the end face, which fills the swivel space of the segments (7', 8') when the segments (7', 8') are pushed out, wherein the circular ring region (10, 25) lies closely against both the back of the segments (7', 8') and also against the surface of the cylindrical shaft (4).

3. A device according to Claim 2, characterised in that in the region of the segments (7' , 8') contact surfaces (17) are arranged on the lever arms (15, 28) to determine the position of the segment (7', 8') in radial direction and end faces (16) or key surfaces (18) to determine position in axial direction, which lie against counter surfaces of the core socket (3) or of an adjustable fitting ring inside the core socket (3) in the operating position of the device.

4. A device according to Claims 1 to 3, characterised in that on the angle levers (13,26), facing the core socket (3), oblique faces (18) or abutting faces are provided opposite oblique inner faces of the core socket (3) or of a component connected with the latter.

5. A device according to one of Claims 1 to 4, characterised in that the angle levers (13) of the first segments (7') have a sliding surface (37) facing the core socket (3), which sliding surface (37), on axial displacement of the segments (7') withdrawn from the operating position, lie in a sliding manner against an inner control surface (38) of the core socket (3) or of an insert body thereof.

6. A device according to one of Claims 1 to 5, characterised in that on the axial lever arms (15) of the angle levers of the first segment group (7') on the side facing away from the core socket (3) in each case a contact surface (36) is provided as carrier for the end face (35) of the annular sleeve (9) on its displacement into the operating position of the device.

7. A device according to one of Claims 1 to 6, characterised in that the annular sleeve (9) is axially displaceable within a recess of the core socket (3) relative to the latter by means of a compressed air- or hydraulic cylinder, that the annular sleeve (9) has a carrier surface (33) on the end facing the cylinder, which carrier surface (33) is able to be placed against an inner annular surface (34) of the core sleeve (3) and that the core sleeve (3), after opening of the divisible outer matrix (1) and disengagement of a fitting ring (2), which is able to be placed into the plane of division between the outer matrix (1) and core socket (2), for opening from the mould of the die casting (5) is able to be removed therefrom.

## Revendications

1. Dispositif pour la réalisation de raccords tubulaires comportant une gorge annulaire intérieure, ce dispositif comprenant intérieurement un noyau de formage avec un bourrelet annulaire pour le formage par expansion de ladite gorge annulaire, ce bourrelet étant fractionné en segments (7', 8'; 7'', 8'') qui sont susceptibles de faire saillie sur la surface cylindrique du noyau de formage et qui sont susceptibles d'être rétractés à l'intérieur du noyau, et parmi lesquels un premier groupe de segments (7) présente des flancs convergeant vers l'extérieur et qui sont disposés aux extrémités côté frontal de bras de leviers (15), dirigés de façon sensiblement axiale, de leviers coudés (13) dont les axes de rotation (19) sont placés sur une bague (20) mobile axialement dans un manchon du noyau; tandis que par ailleurs les segments (8', 8'') du deuxième groupe de segments (8) sont placés entre les segments (7', 7'') du premier groupe de segments (7) et sont disposés aux extrémités de bras de leviers (28) dirigés de façon sensiblement axiale de leviers (26) dont les axes de rotation (27) sont fixes sans possibilité de coulissement; un fourreau annulaire (9) étant monté à l'intérieur du manchon de noyau (3) sur un arbre cylindrique comme support de noyau (4) avec possibilité de déplacement axial au moyen d'un vérin pneumatique ou hydraulique, et présentant dans sa paroi extérieure, des rainures (11) ou fentes s'étendant axialement sur la périphérie, et dans lesquelles s'engagent les bras de leviers (14) dirigés de façon sensiblement radiale des leviers coudés (13) du premier groupe de segments (7), caractérisé en ce que les leviers (26) du deuxième groupe de segments (8) sont aussi conformés en leviers coudés (26), aux extrémités côté frontal desquels sont disposés les segments (8', 8'') correspondants et dont les axes de rotation (27) sont fixés sur le manchon de noyau (3), en ce que le fourreau annulaire (9) présente aussi dans sa paroi extérieure, pour le deuxième groupe de segments (8), des rainures (12) ou fentes s'étendant axialement sur la périphérie, et dans lesquelles s'engagent les bras de leviers (29) dirigés de façon sensiblement axiale des leviers coudés (26) du deuxième groupe de segments (8), et en ce que des surfaces terminales de commande (22, 30) des rainures (11) associées au premier groupe de segments (7), par coulissement du fourreau annulaire (9) pour le retrait radial et ensuite axial du premier groupe de segments (7) et pour le déplacement axial de la bague mobile (20) ensemble avec les leviers coudés (13) du premier groupe de segments (7) et le premier groupe de segments (7) lui même, viennent d'abord au contact des bras de levier radiaux (14) des leviers coudés (13) de ce premier groupe de segments (7) et en ce que les rainures (12) associées au deuxième groupe de segments (8) présentent des surfaces terminales de commande (30) qui sont espacées axialement des surfaces terminales précitées (22) et qui opèrent le retrait des leviers coudés (12) du deuxième groupe de segments (8) et ainsi du deuxième groupe de segments (8).

2. Dispositif selon la revendication 1, caractérisé en ce que le fourreau annulaire (9) présente, côté frontal, une région circulaire (10, 25), qui, lorsque les segments (7', 8') sont déployés, comble l'espace de basculement des segments (7', 8'), cette région circulaire (10, 25) s'appliquant étroitement aussi bien au dos des segments (7', 8') qu'à la paroi de l'arbre cylindrique (4).

3. Dispositif selon la revendication 2, caractérisé en ce que dans la région des segments (7', 8') des surfaces de contact (17) sont prévues sur les bras de leviers (15, 28) pour le positionnement des segments (7', 8') dans la direction radiale, ainsi que des surfaces frontales (16) ou des surfaces obliques (18) pour leur positionnement dans la direction axiale, surfaces qui sont adjacentes à des contre-surfaces du manchon de noyau (3) ou d'une bague d'adaptation ajustable à l'intérieurdu manchon de noyau (3) dans la position de travail du dispositif.

4. Dispositif selon l'une des revendications 1 à 3, caractérisé en ce que, sur les leviers coudés (13, 26), en face du manchon de noyau (3), des surfaces inclinées (18) ou des surfaces d'appui sont prévues en regard de surfaces intérieures inclinées du manchon de noyau (3) ou d'un organe lié à celui-ci.

5. Dispositif selon l'une des revendications 1 à 4, caractérisé en ce que le levier coudé (13) des premiers segments (7') présente une surface de glissement (37) tournée vers le manchon de noyau (3), et qui est en contact de glissement avec une surface intérieure de commande (38) du manchon de noyau (3) ou d'un appendice de celui-ci, lors du déplacement axial des segments (7') retirés de leur position de travail.

6. Dispositif selon l'une des revendications 1 à 5, caractérisé en ce que sur chacun des bras de leviers axiaux (15) des leviers coudés du premier groupe de segments (7'), du côté opposé au manchon de noyau, sont prévues des surfaces de contact (36) destinées à coopérer avec les surfaces frontales (35) du fourreau annulaire (9) lors du déplacement de ce dernier dans la position de travail du dispositif.

7. Dispositif selon l'une des revendications 1 à 6, caractérisé en ce que le manchon annulaire (9) est susceptible de déplacement à l'intérieur d'un logement du manchon de noyau (3), par rapport à celui-ci, au moyen d'un vérin pneumatique ou hydraulique, en ce que le manchon annulaire (9) comporte à l'extrémité tournée vers le vérin une surface d'entraînement (33), laquelle est applicable contre une surface annulaire intérieure (34) du manchon de noyau (3), et en ce que le manchon de noyau (3), après ouverture du moule extérieur fractionnable (1) et déverrouillage d'une bague d'adaptation (2) insérable dans le plan de séparation entre le moule extérieur (1) et le manchon de noyau (3) pour le démoulage de la pièce moulée par injection (5), est susceptible d'être extraite de cette dernière.
